# EUROPEAN PATENT SPECIFICATION

(11) **EP 4 334 926 B1**
(45) Date of publication and mention of the grant of the patent: **27.08.2025**
(21) Application number: 22725106.3
(22) Date of filing: 04.05.2022
(51) Int. Cl.: G09B 21/00

(54) **ACCESSIBILITY ENHANCED CONTENT CREATION**
DURCH ZUGÄNGLICHKEIT ERWEITERTE INHALTSERZEUGUNG
CRÉATION DE CONTENU AMÉLIORÉ D'ACCESSIBILITÉ

(30) Priority: 05.05.2021 US 202163184692 P; 12.05.2021 US 202163187837 P; 03.05.2022 US 202217735920
(43) Date of publication of application: 13.03.2024
(73) Proprietor: Disney Enterprises, Inc., Burbank, CA 91521 (US)
(72) Inventor: ARANA, Mark, Burbank, CA 91521 (US); NAVARRE, Katherine S., Burbank, CA 91521 (US); RADFORD, Michael A., Burbank, CA 91521 (US); RICE, Joseph S., Burbank, CA 91521 (US)
(74) Representative: Dr. Weitzel & Partner
(86) International application number: PCT/US2022/027716
(87) International publication number: WO 2022/235834

(56) References cited:
- US-A1- 2014 046 661
- US-A1- 2019 052 473
- US-A1- 2019 251 344
- UNKNOWN: "Guidelines for positioning of sign language interpreters in conferences, including web-streaming", 21 December 2016 (2016-12-21), XP055938470, Retrieved from the Internet <URL:https://aiic.org/document/1041/AIICWebzine_2018_Issue72_7_Sign_Language_Network_Guidelines_for_positioning_of_sign_language_interpreters_in_conferences_including_web-streaming_EN.pdf> [retrieved on 20220705]

## Description

The present invention refers to a method and system for accessibility enhanced content creation.

### BACKGROUND

A variety of accessibility features, such as vision compensation, hearing assistance, and neurodiversity tools, for example, can greatly improve the experience of interacting with media content for persons experiencing disabilities. As a specific example, members of the deaf and hearing impaired communities often rely on any of a number of signed languages for communication via hand signals. Although effective in translating the plain meaning of a communication, hand signals alone typically do not fully capture the emphasis or emotional intensity motivating that communication. Accordingly, skilled human sign language translators tend to employ multiple physical modes when communicating information. Those modes may include gestures other than hand signals, postures, and facial expressions, as well as the speed and force with which such expressive movements are executed.

For a human sign language translator, identification of the appropriate emotional intensity and emphasis to include in a signing performance may be largely intuitive, based on cognitive skills honed unconsciously as the understanding of spoken language is learned and refined through childhood and beyond. However, the exclusive reliance on human sign language translation can be expensive, and in some use cases may be inconvenient or even impracticable, while analogous challenges to the provision of vision compensated and neurodiversity sensitive content exist. Consequently, there is a need in the art for an efficient and scalable solution for creating accessibility enhanced content.

US 2014/046661 A1 discloses methods of providing a translation of information including an OCR process applied to an image and/or text that is then converted to the sign language.

US 2019/251344 A1 discloses methods, an apparatus and systems for a sign language recognition.

The invention is defined by the features of the independent claims. The dependent claims describe preferred embodiments.

### BRIEF DESCRIPTION OF THE DRAWINGS

Figure 1 shows a diagram of an exemplary system for creating accessibility enhanced content, according to one implementation;
Figure 2 shows a diagram of another exemplary implementation of a system for creating accessibility enhanced content, according to one implementation;
Figure 3 shows an exemplary implementation in which accessibility enhanced content is provided to one or more viewers via a user system; and
Figure 4 shows a flowchart outlining an exemplary method for creating accessibility enhanced content, according to one implementation.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses systems and methods for creating accessibility enhanced content. It is noted that although the present content enhancement solution is described below in detail by reference to the exemplary use case in which sign language is used to enhance audio-video content having both audio and video components, the present novel and inventive principles may be advantageously applied to video unaccompanied by audio, as well as to audio content unaccompanied by video. In addition, or alternatively, in some implementations, the type of content that is accessibility enhanced according to the present novel and inventive principles may be or include digital representations of persons, fictional characters, locations, objects, and identifiers such as brands and logos, for example, which populate a virtual reality (VR), augmented reality (AR), or mixed reality (MR) environment. Moreover, that content may depict virtual worlds that can be experienced by any number of users synchronously and persistently, while providing continuity of data such as personal identity, user history, entitlements, possessions, payments, and the like. It is noted that the accessibility enhancement solution disclosed by the present application may also be applied to content that is a hybrid of traditional audio-video and fully immersive VR/AR/MR experiences, such as interactive video.

It is further noted that, as defined in the present application, the expression "sign language" refers to any of a number of signed languages relied upon by the deaf community and other hearing impaired persons for communication via hand signals, facial expressions, and in some cases larger body motions or postures. Examples of sign languages within the meaning of the present application include sign languages classified as belonging to the American Sign Language (ASL) cluster, Brazilian sign Language (LIBRAS), the French Sign Language family, Indo-Pakistani Sign Language, Chinese Sign Language, the Japanese Sign Language family, and the British, Australian, and New Zealand Sign Language (BANZSL) family, to name a few.

It is also noted that although the present content enhancement solution is described below in detail by reference to the exemplary use case in which a sign language performance is used to enhance content, the present novel and inventive principles may also be applied to content enhancement through the use of an entire suite of accessibility enhancements. Examples of such accessibility enhancements include assisted audio, forced narratives, subtitles, captioning, and the provision of haptic effects, to name a few. Moreover, in some implementations, the systems and methods disclosed by the present application may be substantially or fully automated.

As used in the present application, the terms "automation," "automated," and "automating" refer to systems and processes that do not require the participation of a human analyst or editor. Although, in some implementations, a human system administrator may sample or otherwise review the accessibility enhanced content distributed by the automated systems and according to the automated methods described herein, that human involvement is optional. Thus, the methods described in the present application may be performed under the control of hardware processing components of the disclosed automated systems.

It is also noted that, as defined in the present application, the expression "machine learning model" may refer to a mathematical model for making future predictions based on patterns learned from samples of data or "training data." For example, machine learning models may be trained to perform image processing, natural language processing (NLP), and other inferential processing tasks. Various learning algorithms can be used to map correlations between input data and output data. These correlations form the mathematical model that can be used to make future predictions on new input data. Such a predictive model may include one or more logistic regression models, Bayesian models, or artificial neural networks (NNs). A "deep neural network," in the context of deep learning, may refer to an NN that utilizes multiple hidden layers between input and output layers, which may allow for learning based on features not explicitly defined in raw data. As used in the present application, a feature identified as an NN refers to a deep neural network.

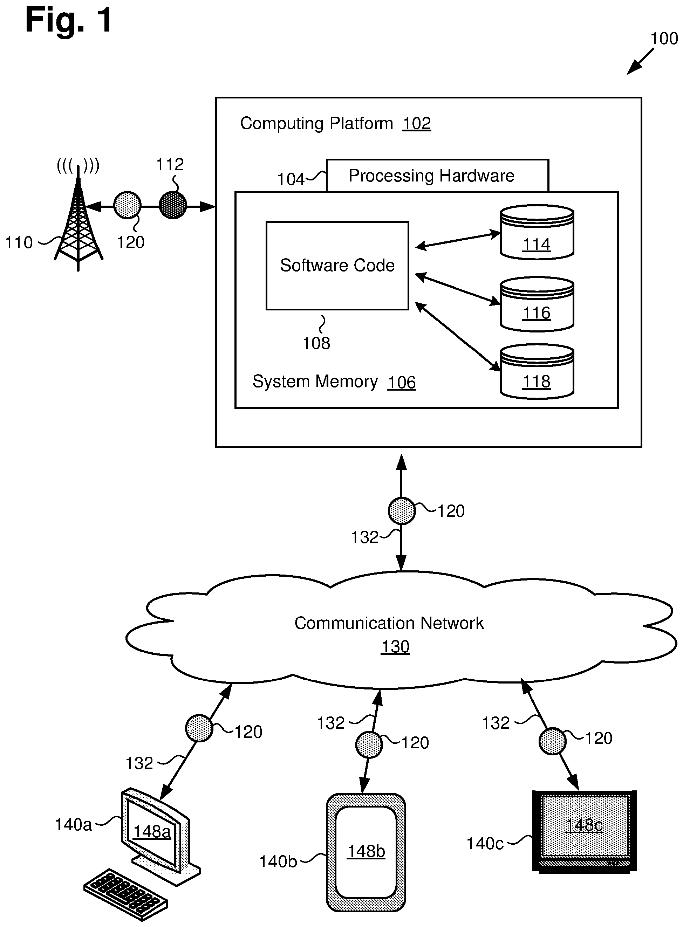

Figure 1 shows exemplary system 100 for creating accessibility enhanced content, according to one implementation. As shown in Figure 1, system 100 includes computing platform 102 having processing hardware 104 and system memory 106 implemented as a computer-readable non-transitory storage medium. According to the present exemplary implementation, system memory 106 stores software code 108 that may include one or more machine learning models, as well as performer database 114, word string database 116, and video tokens database 118.

As further shown in Figure 1, system 100 is implemented within a use environment including content broadcast source 110 providing primary content 112 to system 100 and receiving accessibility enhanced content 120 corresponding to primary content 112 from system 100. With respect to the feature "performer database," as defined for the purposes of the present application the term "performer" refers to a digital representation of an actor, or a virtual character such as an animated model or cartoon for example, that delivers or "performs" an accessibility enhancement, such as narration, voice-over, or a sign language interpretation of primary content 112.

In addition, as defined for the purposes of the present application, the feature "word string" may refer to a single word or a phrase including a sequence of two or more words. Moreover, in some implementations, a word string entry in word string database 116 may include, in addition to a particular word string, one or more of the probability of that word string corresponding to a particular emotive state, physical gestures or facial expressions corresponding to the word string, or haptic effects associated with the word string.

Regarding the feature "video tokens," it is noted that as defined in the present application, a "video token" refers to a snippet of video content including a predetermined accessibility enhancement. In the exemplary use case of content enhanced using by a performance of a sign language translation (hereinafter "sign language performance"), for example, single word signs, certain commonly used sequences of signs, or commonly recognized shorthand representations of lengthy sequences of signs may be pre-produced as video tokens to be played back when primary content 112 reaches a location corresponding respectively to each video token.

As depicted in Figure 1, in some use cases, content broadcast source 110 may find it advantageous or desirable to make primary content 112 available via an alternative distribution mode, such as communication network 130, which may take the form of a packet-switched network, for example, such as the Internet. For instance, system 100 may be utilized by content broadcast source 110 to distribute accessibility enhanced content 120 including primary content 112 as part of a content stream, which may be an Internet Protocol (IP) content stream provided by a streaming service, or a video-on-demand (VOD) service.

The use environment of system 100 also includes user systems 140a, 140b, and 140c (hereinafter "user systems 140a-140c") receiving accessibility enhanced content 120 from system 100 via communication network 130. With respect to user systems 140a-140c, it is noted that although Figure 1 depicts three user systems, that representation is merely by way of example. In other implementations, user systems 140a-140c may include as few as one user system, or more than three user systems.

Also shown in Figure 1 are network communication links 132 of communication network 130 interactively connecting system 100 with user systems 140a-140c, as well as displays 148a, 148b, and 148c (hereinafter "displays 148a-148c") of respective user systems 140a-140c. As discussed in greater detail below, accessibility enhanced content 120 includes primary content 112 as well as an accessibility track synchronized to primary content 112. In some implementations, for example, such an accessibility track may include imagery depicting a performance of a sign language translation of primary content 112 for rendering on one or more of displays 148a-148c.

Although the present application refers to software code 108, performer database 114, word string database 116, and video tokens database 118 as being stored in system memory 106 for conceptual clarity, more generally, system memory 106 may take the form of any computer-readable non-transitory storage medium. The expression "computer-readable non-transitory storage medium," as used in the present application, refers to any medium, excluding a carrier wave or other transitory signal that provides instructions to processing hardware 104 of computing platform 102 or to respective processing hardware of user systems 140a-140c. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs such as DVDs, RAM, programmable read-only memory (PROM), erasable PROM (EPROM), and FLASH memory.

Moreover, although Figure 1 depicts to software code 108, performer database 114, word string database 116, and video tokens database 118 as being co-located in system memory 106, that representation is also provided merely as an aid to conceptual clarity. More generally, system 100 may include one or more computing platforms 102, such as computer servers for example, which may be co-located, or may form an interactively linked but distributed system, such as a cloud-based system, for instance. As a result, processing hardware 104 and system memory 106 may correspond to distributed processor and memory resources within system 100. Consequently, in some implementations, one or more of software code 108, performer database 114, word string database 116, and video tokens database 118 may be stored remotely from one another on the distributed memory resources of system 100.

Processing hardware 104 may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as software code 108, from system memory 106, while a GPU may be implemented to reduce the processing overhead of the CPU by performing computationally intensive graphics or other processing tasks. A TPU is an application-specific integrated circuit (ASIC) configured specifically for artificial intelligence (AI) processes such as machine learning.

In some implementations, computing platform 102 may correspond to one or more web servers accessible over a packet-switched network such as the Internet, for example. Alternatively, computing platform 102 may correspond to one or more computer servers supporting a wide area network (WAN), a local area network (LAN), or included in another type of private or limited distribution network. In addition, or alternatively, in some implementations, system 100 may utilize a local area broadcast method, such as User Datagram Protocol (UDP) or Bluetooth, for instance. Furthermore, in some implementations, system 100 may be implemented virtually, such as in a data center. For example, in some implementations, system 100 may be implemented in software, or as virtual machines.

It is further noted that, although user systems 140a-140c are shown variously as desktop computer 140a, smartphone 140b, and smart television (smart TV) 140c, in Figure 1, those representations are provided merely by way of example. In other implementations, user systems 140a-140c may take the form of any suitable mobile or stationary computing devices or systems that implement data processing capabilities sufficient to provide a user interface, support connections to communication network 130, and implement the functionality ascribed to user systems 140a-140c herein. That is to say, in other implementations, one or more of user systems 140a-140c may take the form of a laptop computer, tablet computer, digital media player, game console, or a wearable communication device such as a smartwatch, AR viewer, or VR headset, to name a few examples. It is also noted that displays 148a-148c may take the form of liquid crystal displays (LCDs), light-emitting diode (LED) displays, organic light-emitting diode (OLED) displays, quantum dot (QD) displays, or any other suitable display screens that perform a physical transformation of signals to light.

In some implementations, content broadcast source 110 may be a media entity providing primary content 112. Primary content 112 may include content from a linear TV program stream, for example, that includes a high-definition (HD) or ultra-HD (UHD) baseband video signal with embedded audio, captions, time code, and other ancillary metadata, such as ratings and/or parental guidelines. In some implementations, primary content 112 may also include multiple audio tracks, and may utilize secondary audio programming (SAP) and/or Descriptive Video Service (DVS), for example. Alternatively, in some implementations, primary content 112 may be video game content. As yet another alternative, and as noted above, in some implementations primary content 112 may be or include digital representations of persons, fictional characters, locations, objects, and identifiers such as brands and logos, for example, which populate a VR, AR, or MR environment. Moreover, primary content 112 may depict virtual worlds that can be experienced by any number of users synchronously and persistently, while providing continuity of data such as personal identity, user history, entitlements, possessions, payments, and the like. As also noted above, primary content 112 may be or include content that is a hybrid of traditional audio-video and fully immersive VR/AR/MR experiences, such as interactive video.

In some implementations, primary content 112 may be the same source video that is broadcast to a traditional TV audience. Thus, content broadcast source 110 may take the form of a conventional cable and/or satellite TV network, for example. As noted above, content broadcast source 110 may find it advantageous or desirable to make primary content 112 available via an alternative distribution mode, such as communication network 130, which may take the form of a packet-switched network, for example, such as the Internet, as also noted above. Alternatively, or in addition, although not depicted in Figure 1, in some use cases accessibility enhanced content 120 may be distributed on a physical medium, such as a DVD, Blu-ray Disc^{®}, or FLASH drive, for example.

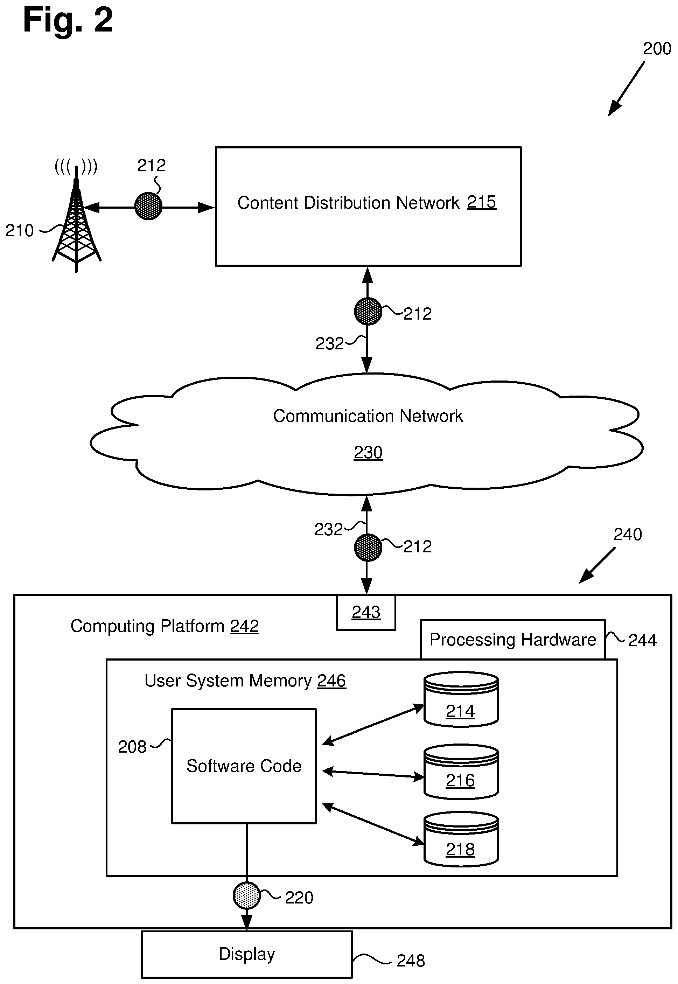

Figure 2 shows another exemplary system, i.e., user system 240, for use in creating accessibility enhanced content, according to one implementation. As shown in Figure 2, user system 240 includes computing platform 242 having transceiver 243, processing hardware 244, user system memory 246 implemented as a computer-readable non-transitory storage medium, and display 248. As further shown in Figure 2, user system memory 246 stores software code 208, performer database 214, word string database 216, and video tokens database 218. With respect to display 248, it is noted that, in various implementations, display 248 may be physically integrated with user system 240 or may be communicatively coupled to but physically separate from user system 240. For example, where user system 240 is implemented as a smart TV, smartphone, laptop computer, tablet computer, AR viewer, or VR headset, display 248 will typically be integrated with user system 240. By contrast, where user system 240 is implemented as a desktop computer, display 248 may take the form of a monitor separate from computing platform 242 in the form of a computer tower.

As also shown in Figure 2, user system 240 is utilized in use environment 200 including content broadcast source 210 providing primary content 212 to content distribution network 215, which in turn distributes primary content 212 to user system 240 via communication network 230 and network communication links 232. According to the implementation shown in Figure 2, software code 208 stored in user system memory 246 of user system 240 is configured to receive primary content 212 and to output accessibility enhanced content 220 including primary content 212 for rendering on display 248.

Content broadcast source 210, primary content 212, accessibility enhanced content 220, communication network 230, and network communication links 232 correspond respectively in general to content broadcast source 110, primary content 112, accessibility enhanced content 120, communication network 130, and network communication links 132, in Figure 1. In other words, content broadcast source 210, primary content 212, accessibility enhanced content 220, communication network 230, and network communication links 232 may share any of the characteristics attributed to respective content broadcast source 110, primary content 112, accessibility enhanced content 120, communication network 130, and network communication links 132 by the present disclosure, and vice versa.

User system 240 and display 248 correspond respectively in general to any or all of user systems 140a-140c and respective displays 148a-148c in Figure 1. Thus, user systems 140a-140c and displays 148a-148c may share any of the characteristics attributed to respective user system 240 and display 248 by the present disclosure, and vice versa. That is to say, like displays 148a-148c, display 248 may take the form of an LCD, LED display, OLED display, or QD display, for example. Moreover, although not shown in Figure 1, each of user systems 140a-140c may include features corresponding respectively to computing platform 242, transceiver 243, processing hardware 244, and user system memory 246 storing software code 208.

Transceiver 243 may be implemented as a wireless communication unit configured for use with one or more of a variety of wireless communication protocols. For example, transceiver 243 may be implemented as a fourth generation (4G) wireless transceiver, or as a 5G wireless transceiver. In addition, or alternatively, transceiver 243 may be configured for communications using one or more of WiFi, Bluetooth, Bluetooth LE, ZigBee, and 60 GHz wireless communications methods.

User system processing hardware 244 may include multiple hardware processing units, such as one or more CPUs, one or more GPUs, one or more TPUs, and one or more FPGAs, for example, as those features are defined above.

Software code 208, performer database 214, word string database 216, and video tokens database 218 correspond respectively in general to software code 108, performer database 114, word string database 116, and video tokens database 118, in Figure 1. Thus, software code 208, performer database 214, word string database 216, and video tokens database 218, may share any of the characteristics attributed to respective software code 108, performer database 114, word string database 116, and video tokens database 118 by the present disclosure, and vice versa. In other words, like software code 108, software code may include one or more machine learning models. Moreover, in implementations in which client processing hardware 244 executes software code 208 stored locally in user system memory 246, user system 240 may perform any of the actions attributed to system 100 by the present disclosure. Thus, in some implementations, software code 208 executed by processing hardware 244 of user system 240 may receive primary content 212 and may output accessibility enhanced content 220 including primary content 212 and an accessibility track synchronized to primary content 212.

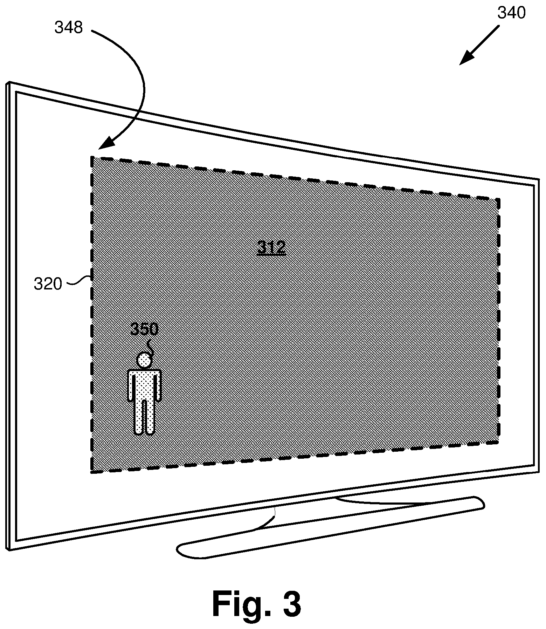

Figure 3 shows an exemplary implementation in which accessibility enhanced content 320 is provided to one or more viewers via user system 340. As shown in Figure 3, accessibility enhanced content 320 includes primary content 312 and sign language translation 350 of primary content 312, shown as an overlay of primary content 312 on display 348. User system 340, display 348, primary content 312, and accessibility enhanced content 320 correspond respectively in general to user system(s) 140a-140c/240, display(s) 148a-148c/248, primary content 112/212, and accessibility enhanced content 120/220 in Figures 1 and 2. As a result, user system 340, display 348, primary content 312, and accessibility enhanced content 320 may share any of the characteristics attributed to respective user system(s) 140a-140c/240, display(s) 148a-148c/248, primary content 112/212, and accessibility enhanced content 120/220 by the present disclosure, and vice versa. That is to say, like display(s) 148a-148c/248, display 348 may take the form of an LCD, LED display, OLED display, QD display, or any other suitable display screen that performs a physical transformation of signals to light. In addition, although not shown in Figure 3, user system 340 may include features corresponding respectively to computing platform 242, processing hardware 244, and system memory storing software code 208, performer database 214, word string database 216, and video tokens database 218, in Figure 2.

It is noted that although sign language translation 350 of primary content 312, is shown as an overlay of primary content 312, in Figure 3, that representation is merely exemplary. In other implementations, the display dimensions of primary content 112/212/312 may be reduced so as to allow sign language translation 350 of primary content 112/212312 to be rendered next to primary content 112/212/312, e.g., above, below, or laterally adjacent to primary content 112/212/312. Alternatively, in some implementations, sign language translation 350 of primary content 112/212/312 may be projected or otherwise displayed on a surface other than display 148a-148c/248/348, such as a projection screen or wall behind or next to user system 140a-140c/240/340, for example.

Sign language translation 350 of primary content 112/212/312 may be performed by a performer in the form of a digital representation of an actor a computer generated digital character (hereinafter "animated model"), such as an animated cartoon for example. For instance, software code 108/208 may be configured to programmatically interpret one or more of visual images, audio, a script, captions, subtitles, or metadata of primary content 112/212/312 into sign language hand signals, as well as other gestures, postures, and facial expressions communicating a message conveyed by content 112/212/312, and to perform that interpretation using the performer. It is noted that background music with lyrics can be distinguished from lyrics being sung by a character using facial recognition, object recognition, activity recognition, or any combination of those technologies performed by software code 108/208, for example using one or more machine learning model-based analyzers included in software code 108/208. It is further noted that software code 108/208 may be configured to predict appropriate facial expressions and postures for execution by the performer during performance of sign language translation 350, as well as to predict the speed and forcefulness or emphasis with which the performer executes the performance of sign language translation 350.

Referring to Figures 1 and 3 in combination, in some implementations, processing hardware 104 of computing platform 102 may execute software code 108 to synchronize sign language translation 350 with a timecode of primary content 112/312 when producing accessibility enhanced content 120/320, and to record accessibility enhanced content 120/320, or to broadcast or stream accessibility enhanced content 120/320 to user system 140a-140c/340. In some of those implementations, the performance of sign language translation 350 by the performer may be pre-rendered by system 100 and broadcasted or streamed to user system 148a-148c/340. However, in other implementations in which accessibility enhanced content 120/320 including primary content 112/312 and sign language translation 350 are broadcasted or streamed to user system 140a-140c/340, processing hardware 104 may execute software code 108 to generate sign language translation 350 dynamically during the recording, broadcasting, or streaming of primary content 112/312.

Further referring to Figure 2, in yet other implementations in which primary content 212/312 is broadcasted or streamed to user system 240/340, processing hardware 244 of user system 240/340 may execute software code 208 to generate sign language translation 350 locally on user system 240/340, and to do so dynamically during play back of primary content 212/312. Processing hardware 244 of user system 240/340 may further execute software code 208 to render the performance of sign language translation 350 on display 248/348 contemporaneously with rendering primary content 212/312.

In some implementations, the pre-rendered performance of sign language translation 350 by a performer, or facial points and other digital character landmarks for performing sign language translation 350 dynamically using the performer may be transmitted to user system(s) 140a-140c/240/340 using a separate communication channel than that used to send and receive primary content 112/212/312. In one such implementation, the data for use in performing sign language translation 350 may be generated by software code 108 on system 100, and may be transmitted to user system(s) 140a-140c/240/340. In other implementations, the data for use in performing sign language translation 350 may be generated locally on user system 240/340 by software code 208, executed by processing hardware 244.

According to some implementations, multiple channels can be used to transmit sign language performance 350. For example, in some use cases primary content may include dialogue including multiple interactive conversations among two or more participant. In some such use cases, sign language performance 350 may include multiple performers, each corresponding respectively to one of the multiple participants. Moreover, in some use cases, the performance by each individual performer may be transmitted to user system(s) 140a-140c/240/340 on separate communication channels.

In some implementations, it may be advantageous or desirable to enable a user of user system(s) 140a-140c/240/340 to affirmatively select a particular performer to perform sign language translation 350 from a predetermined cast of selectable performers. In those implementations, a child user could select an age appropriate performer different from a performer selected by an adult user. Alternatively, or in addition, the cast of selectable performers may vary depending on the subject matter of primary content 112/212/312. For instance, where primary content 112/212/312 portrays a sporting event, the selectable or default performer for performing sign language translation 350 may depict athletes, while actors or fictional characters may be depicted by sign language translation 350 when primary content 112/212/312 is a movie or episodic TV content.

In some implementations, sign language performance 350 may include a full-length video of a performer signing the audio of primary content 112/212/312, or can include a set of short video tokens each depicting single word signs, certain commonly used sequences of signs, or commonly recognized shorthand representations of lengthy sequences of signs, as noted above. Primary content 112/212/312 may have a dedicated layer for delivering sign language performance 350. Where sign language performance 350 includes the full-length video, sign language performance 350 may be streamed contemporaneously with streaming of primary content 112/212/312, and may be synchronized to a subtitle track of primary content 112/212/312, for example. In some implementations, such a dedicated sign language layer can be toggled on/off. Where sign language performance 350 includes a set of video tokens, those video tokens may be delivered to and stored on user system(s) 140a-140c/240/340, and a video token can be played back when the subtitle track reaches a corresponding word or phrase, for example. In some implementations, sign language performance 350 may be displayed as a picture-in-picture (PiP) overlay on primary content 112/212/312 that can be repositioned or toggled on/off based on a user selection. The PiP overlay of sign language performance 350 can employ alpha masking (green-screening) to show only the performer of sign language performance 350, or the performer having an outline added for contrast.

In some implementations, sign language performance 350 may be derived from audio of primary content 112/212/312 using natural language processing (NLP). Sign language performance 350 may also be derived from subtitles or closed captioning of primary content 112/212/312 using text recognition. In some implementations, sign language performance 350 may be computer generated and displayed utilizing an animated model, as noted above. Instructions for rendering the animated model and its animations may be delivered to user system(s) 140a-140c/240/340, and the animated model may be rendered on user system(s) 140a-140c/240/340. Alternatively, the animated model and its animations may be partially or fully pre-rendered and delivered to user system(s) 140a-140c/240/340. Bandwidth and caching capabilities can be checked before delivering pre-rendered models or animations. The animated model and its animations may be display as a PiP overlay.

Video tokens database 118 of system 100, or video tokens database 218 of user system(s) 140a-140c/240/340 may include animated performances of commonly used signs with multiple performances available for each sign or sequence of signs depending on the emotion of the performance. The choice of which performance is selected for a given word or phrase could then be determined by another data set that is delivered to user system(s) 140a-140c/240/340. The performances may be captured for a standard humanoid rig or multiple humanoid rigs with varying proportions, and then dynamically applied to any animated model with the same proportions, as a way to allow a programmer or user to select which animated model will perform the sign.

In implementations in which primary content 112/212/312 includes location information, such as from sports cameras or other two-dimensional (2D) or three-dimensional (3D) cameras, a performer for performing sign language performance 350 may be inserted into primary content 112/212/312, rather than simply overlaid on primary content 112/212/312. For example, the performer could be inserted into primary content 112/212/312 at various depths, or behind various objects. The performer inserted into primary content 112/212/312 could appear to maintain its respective orientation, e.g., facing a football field, as the camera moves in a given scene, or could change its orientation during the scene to always face the camera. Where primary content 112/212/312 includes color awareness, such as DOLBY VISION^{®}, the performer may dynamically adapt to colors of primary content 112/212/312. For example, grading can be applied to the performer in order for the performer to blend in with primary content 112/212/312, or grading can be removed from the performer in order to create contrast with primary content 112/212/312. The performer may continually adapt to different colors as primary content 112/212/312 plays. As another example, where a sign language performance 350 PiP overlay is located in the bottom right of display 148a-148c/248/348, as action begins to occur in the bottom right, the PiP overlay can be relocated to the bottom left.

In some implementations, a first data set may be utilized to control the performer to perform signing, e.g., with its hands and arms. The first data set can be derived from primary content 112/212/312, e.g., from text recognition of the subtitles, closed captioning, NLP of the audio, or any combination thereof. A second data set (hereinafter "emotive data set") can be utilized to control the performer to perform emotions, e.g., facial expressions and other gestures. Such an emotive data set may be a collection of metadata tags that adhere to a predefined taxonomy and are attached to specific timestamps or timecode intervals, for example. Alternatively, in some implementations, the metadata tag definitions themselves may be delivered and loaded when primary content 122/212/312 is played back, thereby advantageously allowing the taxonomy to be refined or improved over time.

The emotive data set can be derived from facial scanning or similar technologies. The emotive data set may also be derived from expression metadata tags in an expressions track of primary content 112/212/312. Expression metadata tags may be manually added by users. Over time, machine learning can be utilized to automate generation of expression metadata tags. The emotive data set can also be derived from audio recognition of primary content 112/212/312. For example, if audio data detects an emotional song, the performer may perform a more emotional facial expression. As noted above, system 100 may include video tokens database 118, or user system(s) 140a-140c/240/340 may include video tokens database 218, of performances of commonly used signs or sequences of signs, with multiple performances available for each sign or sequence of signs depending on the emotion of the performance. The choice of which performance is selected for a given word could then be determined based on the emotive data set.

In use cases in which a performer is experiencing multiple emotions concurrently, several alternatives for expressing that complex emotional state may be employed. In some use cases, a video token or performance identified by the same metadata tags as the desired emotional state may already exist. Alternatively, existing performances that collectively include the metadata tags of the desired emotional state could be blended together and applied to a performer. As another alternative, the emotive data set may include weights for the individual expression tags at each timecode. In this use case, a video token or performance could be chosen that contains the emotion tag corresponding to the expression tag with the highest weight. As yet another alternative, there could be predefined business logic for which emotion tags are most important, such as by assigning a predetermined weight to each. In this use case, the video token or performance could be chosen that contains the emotion tag with the highest weight. For example, perhaps "anger" has a higher weight than "tiredness," such that a performer that is concurrently angry and tired executes a performance that conveys anger rather than tiredness.

In some implementations, primary content 112/212/312 stream may include dedicated channels for senses other than hearing and sight, such as a dedicated haptics effects channel. Users may receive haptic effects based on what occurs in primary content 112/212/312. For example, an explosion sound can trigger a shaking haptic effect. Technologies being developed may allow for digital expressions of the sense of taste, and primary content 112/212/312 stream can include a dedicated taste channel.

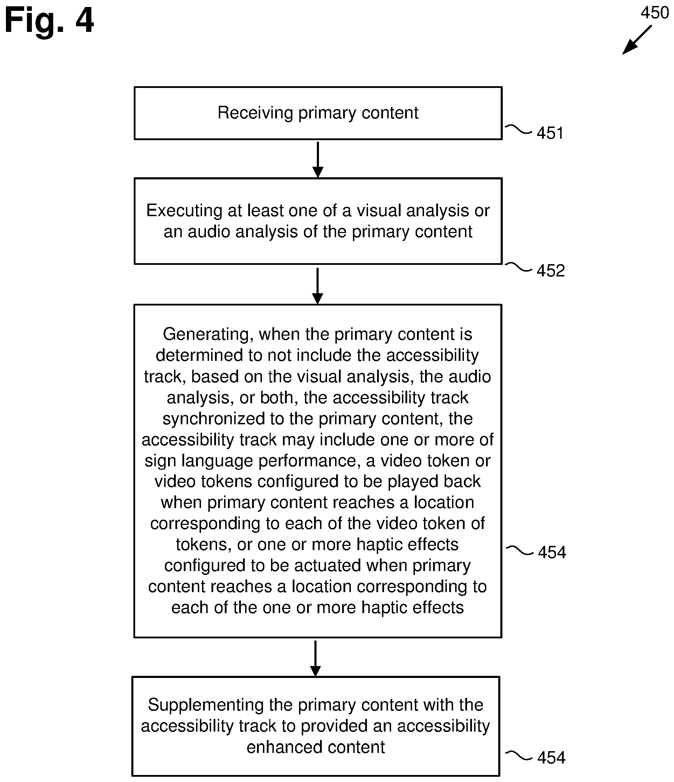

The functionality of system 100, user system(s) 140a-140c/240/340, and software code 108/208 shown variously in Figures 1, 2, and 3 will be further described by reference to Figure 4. Figure 4 shows flowchart 450 presenting an exemplary method for creating accessibility enhanced content, according to one implementation. With respect to the method outlined in Figure 4, it is noted that certain details and features have been left out of flowchart 450 in order not to obscure the discussion of the inventive features in the present application.

Referring to Figure 4 in combination with Figures 1 and 2 flowchart 450 begins with receiving primary content 112/212 (action 451). As noted above, primary content 112/212 may include content in the form of video games, music videos, animation, movies, or episodic TV content that includes episodes of TV shows that are broadcasted, streamed, or otherwise available for download or purchase on the Internet or via a user application. Alternatively, or in addition, primary content 112/212 may be or include digital representations of persons, fictional characters, locations, objects, and identifiers such as brands and logos, for example, which populate a VR, AR, or MR environment. Moreover, primary content 112/212 may depict virtual worlds that can be experienced by any number of users synchronously and persistently, while providing continuity of data such as personal identity, user history, entitlements, possessions, payments, and the like. As also noted above, primary content 112/212 may be or include content that is a hybrid of traditional audio-video and fully immersive VR/AR/MR experiences, such as interactive video.

As shown in Figure 1, in some implementations, primary content 112 may be received by system 100 from broadcast source 110. In those implementations, primary content 112 may be received by software code 108, executed by processing hardware 104 of computing platform 102. As shown in Figure 2, in other implementations, primary content 212 may be received by user system 240 from content distribution network 215 via communication network 230 and network communication links 232. Referring to Figure 2, in those implementations, primary content 212 may be received by software code 208, executed by processing hardware 244 of user system computing platform 242.

Flowchart 450 further includes executing at least one of a visual analysis or an audio analysis of primary content 112/212 (action 452). For example, processing hardware 104/244 may execute software code 108/208 to utilize a visual analyzer included as a feature of software code 108/208, an audio analyzer included as a feature of software code 108/208, or such a visual analyzer and audio analyzer, to perform the analysis of primary content 112/212 in action 452.

In various implementations, a visual analyzer included as a feature of software code 108/208 may be configured to apply computer vision or other AI techniques to primary content 112/212, or may be implemented as an NN or other type of machine learning model. Such a visual analyzer may be configured or trained to recognize which characters are speaking, as well as the intensity of their delivery. In particular, such a visual analyzer may be configured or trained to identify humans, characters, or other talking animated objects, and identify emotions or intensity of messaging. In various use cases, different implementations of such a visual analyzer may be used for different types of content (i.e., a specific configuration or training for specific content). For example, for a news broadcast, the visual analyzer may be configured or trained to identify specific TV anchors and their characteristics, or salient regions of frames within video content for the visual analyzer to focus on may be specified, such as regions in which the TV anchor usually is seated.

An audio analyzer included as a feature of software code 108/208 may also be implemented as an NN or other machine learning model. As noted above, in some implementations, a visual analyzer and an audio analyzer may be used in combination to analyze primary content 112/212. For instance, in analyzing a football game or other sporting event, the audio analyzer can be configured or trained to listen to the audio track of the event, and its analysis may be verified using the visual analyzer or the visual analyzer may interpret the video of the event, and its analysis may be verified using the audio analyzer. It is noted that primary content 112/212 will typically include multiple video frames and multiple audio frames. In some of those use cases, processing hardware 104 may execute software code 108, or processing hardware 244 may execute software code 208 to perform the visual analysis of primary content 112/212, the audio analysis of primary content 112/212, or both the visual analysis and the audio analysis, on a frame-by-frame basis.

In some use cases, primary content 112/212 may include text, such as subtitles or other captioning for example. In use cases in which primary content 112/212 includes text, processing hardware 104/244 may further execute software code 108/208 to utilize a text analyzer included as a feature of software code 108/208 to analyze primary content 112/212. Thus, in use cases in which primary content 112/212 includes text, action 452 may further include analyzing that text.

It is further noted that, in some use cases, primary content 112/212 may include metadata. In use cases in which primary content 112/212 includes metadata, processing hardware 104/244 may execute software code 108/208 to utilize a metadata parser included as a feature of software code 108/208 to extract metadata from primary content 112/212. Thus, in use cases in which primary content 112/212 includes metadata, action 452 may further include extracting and analyzing that metadata.

Referring to Figure 4 in combination with Figures 1-3, flowchart 450 further includes generating, based on executing the at least one of the visual analysis or the audio analysis in action 452, an accessibility track synchronized to primary content 112/212/312 (action 453). Such an accessibility track includes a sign language performance 350, optionally a video token or video tokens configured to be played back when primary content 112/212/312 reaches a location, such as a timestamp or timecode interval, for example, corresponding to each of the video token of tokens, or one or more haptic effects configured to be actuated when primary content 112/212/312 reaches a location corresponding to each of the one or more haptic effects. It is noted that, in some implementations, one or more video tokens may be played back, or one or more haptic effects may be actuated, dynamically, in response to a particular word or words being spoken or in response to the presence of a particular sound in primary content 112/212/312.

It is noted that, in some implementations, action 453 may include first generating the accessibility track and subsequently synchronizing the accessibility track to primary content 112/212/312, while in other implementations the generation of the accessibility track and its synchronization to primary content 112/212/312 may be performed contemporaneously. It is further noted that, in various implementations, the accessibility track generated in action 453 may be synchronized with the timecode of primary content 112/212/312, a subtitle track of primary content 112/212/312, an audio track of primary content 112/212/312, or to individual frames or sequences of frames of primary content 112/212/312. Generation of the accessibility track, or the generation and subsequent synchronization of the accessibility track to primary content 112/212/312, in action 453, may be performed by software code 108 executed by processing hardware 104 of system 100, or by software code 208 executed by processing hardware 244 of user system 240.

Flowchart 450 further includes supplementing primary content 112/212/312 with the accessibility track generated in action 453 to provide accessibility enhanced content 120/220/320 (action 454). Action 454 may be performed by software code 108 executed by processing hardware 104 of system 100, or by software code 208 executed by processing hardware 244 of user system 240/340.

As discussed above by reference to Figures 1 and 3, in some implementations, processing hardware 104 of system 100 may executed software code 108 to broadcast or stream accessibility enhanced content 120/320 including synchronized sign language performance 350 to user system(s) 140a-140c/340. In some of those implementations, the performance of sign language translation 350 may be pre-rendered by system 100 and broadcasted or streamed to user system(s) 140a-140c/340. However, in other implementations in which primary content 112/312 and sign language translation 350 are broadcasted or streamed to user system(s) 140a-140c/340, processing hardware 104 may execute software code 108 to generate sign language translation 350 dynamically during the recording, broadcasting, or streaming of primary content 112/312.

Referring to Figures 2 and 3, in yet other implementations in which primary content 212/312 is broadcasted or streamed to user system 240/340, processing hardware 244 of user system 240/340 may execute software code 208 to generate sign language translation 350 locally on user system 240/340, and to do so dynamically during play back of primary content 112/212/312. Processing hardware 244 of user system 240/340 may further execute software code 208 to render the performance of sign language translation 350 on display 248/348 contemporaneously with rendering primary content 212/312 corresponding to sign language translation 350.

With respect to the method outlined by flowchart 450, it is noted that, in some implementations, actions 451, 452, 453, and 454 may be performed in an automated process from which human participation may be omitted.

Thus, the present application discloses systems and methods for creating accessibility enhanced content. From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive.

## Claims

1. A method comprising:
receiving a primary content (112, 212, 312);
executing at least one of a visual analysis or an audio analysis of the primary content (112, 212, 312);
generating, based on executing the at least one of the visual analysis or the audio analysis, an accessibility track, wherein the accessibility track comprises:
a sign language performance performed using an animated model and an emotive data set utilized to control the animated model to perform emotions or gestures, wherein the emotions or gestures are performed with at least one of determined speed, forcefulness or emphasis; or
one or more haptic effects configured to be actuated when the primary content (112, 212, 312) reaches a location corresponding to each of the one or more haptic effects;
synchronizing the accessibility track to the primary content (112, 212, 312); and
supplementing the primary content (112, 212, 312) with the accessibility track to provide an accessibility enhanced content (120, 220, 320).

2. The method of claim 1, wherein synchronizing the accessibility track to the primary content (112, 212, 312) is performed contemporaneously with generating the accessibility track.

3. The method of claim 1, wherein when the accessibility track comprises the sign language performance, the sign language performance is configured to be displayed as a picture-in-picture (PiP) overlay on the primary content (112, 212, 312).

4. The method of claim 3, wherein the PiP overlay is configured to be repositioned or toggled on or off based on a user selection.

5. The method of claim 3, wherein when the accessibility track comprises the sign language performance, the PiP overlay of the sign language performance employs alpha masking to show only a performer of the sign language performance, or the performer having an outline added for contrast.

6. The method of claim 1, wherein the primary content (112, 212, 312) comprises audio content, and wherein the sign language performance is generated based on the audio content using natural language processing (NLP).

7. The method of claim 6, wherein the animated model changes orientation during a scene to appear as facing a camera.

8. The method of claim 1, wherein the emotive data set is derived from facial scanning.

9. The method of claim 1, wherein the accessibility track further comprises one or more video tokens, wherein each of the one or more video tokens includes a pre-produced video, and wherein each of the one or more video tokens expresses a single word sign, a sequence of signs, or a shorthand representation of a sequence of signs.

10. The method of claim 1, wherein the accessibility track comprises the one or more haptic effects.

11. A system (100) comprising a processing hardware (104) and a memory (106) storing a software code (108), **characterized by**:
the processing hardware (104) adapted to execute the software code (108) to perform the method of any of claims 1-10.

## Patentansprüche

1. Verfahren, umfassend:
Empfangen eines primären Inhalts (112, 212, 312);
Ausführen von mindestens einem von einer visuellen Analyse oder einer Audioanalyse des primären Inhalts (112, 212, 312);
Erzeugen, basierend auf dem Ausführen von mindestens einem von der visuellen Analyse oder der Audioanalyse, einer Barrierefreiheitsspur, wobei die Barrierefreiheitsspur Folgendes umfasst:
eine Gebärdensprachvorführung, die unter Verwendung eines animierten Modells und eines emotionalen Datensatzes durchgeführt wird, der dazu verwendet wird, das animierte Modell zu steuern, um Emotionen oder Gesten vorzuführen, wobei die Emotionen oder die Gesten mit mindestens einem von einer bestimmten Geschwindigkeit, einer Eindringlichkeit oder einer Betonung vorgeführt werden; oder
eine oder mehrere haptische Wirkungen, die dazu konfiguriert sind, ausgelöst zu werden, wenn der primäre Inhalt (112, 212, 312) eine Position erreicht, die jeder der einen oder der mehreren haptischen Wirkungen entspricht;
Synchronisieren der Barrierefreiheitsspur mit dem primären Inhalt (112, 212, 312); und
Ergänzen des primären Inhalts (112, 212, 312) um die Barrierefreiheitsspur, um einen Inhalt mit verbesserter Barrierefreiheit (120, 220, 320) bereitzustellen.

2. Verfahren nach Anspruch 1, wobei das Synchronisieren der Barrierefreiheitsspur mit dem primären Inhalt (112, 212, 312) gleichzeitig mit dem Erzeugen der Barrierefreiheitsspur durchgeführt wird.

3. Verfahren nach Anspruch 1, wobei, wenn die Barrierefreiheitsspur die Gebärdensprachvorführung umfasst, die Gebärdensprachvorführung dazu konfiguriert ist, als eine Bild-in-Bild(PiP)-Überlagerung auf dem primären Inhalt (112, 212, 312) angezeigt zu werden.

4. Verfahren nach Anspruch 3, wobei die PiP-Überlagerung dazu konfiguriert ist, basierend auf einer Benutzerauswahl neu positioniert zu werden oder eingeschaltet oder ausgeschaltet zu werden.

5. Verfahren nach Anspruch 3, wobei, wenn die Barrierefreiheitsspur die Gebärdensprachvorführung umfasst, die PiP-Überlagerung der Gebärdensprachvorführung eine Alpha-Maskierung nutzt, um nur einen Vorführenden der Gebärdensprachvorführung oder den Vorführenden, der eine Kontrastumrandung aufweist, zu zeigen.

6. Verfahren nach Anspruch 1, wobei der primäre Inhalt (112, 212, 312) Audioinhalt umfasst und wobei die Gebärdensprachvorführung basierend auf dem Audioinhalt unter Verwendung von Verarbeitung natürlicher Sprache (NLP) erzeugt wird.

7. Verfahren nach Anspruch 6, wobei das animierte Modell die Ausrichtung während einer Szene ändert, um so auszusehen, als ob es einer Kamera zugewandt ist.

8. Verfahren nach Anspruch 1, wobei der Satz emotionaler Daten von einer Gesichtsabtastung abgeleitet ist.

9. Verfahren nach Anspruch 1, wobei die Barrierefreiheitsspur ferner Folgendes umfasst:
ein oder mehrere Videotoken, wobei jedes des einen oder der mehreren Videotoken ein vorproduziertes Video beinhaltet und wobei jedes des einen oder der mehreren Videotoken ein einzelnes Wortzeichen, eine Sequenz von Zeichen oder eine Kurzdarstellung einer Sequenz von Zeichen exprimiert.

10. Verfahren nach Anspruch 1, wobei die Barrierefreiheitsspur den einen oder die mehreren haptischen Wirkungen umfasst.

11. System (100), umfassend eine Verarbeitungshardware (104) und einen Speicher (106), der einen Softwarecode (108) speichert, **gekennzeichnet dadurch, dass**: die Verarbeitungshardware (104) dazu ausgelegt ist, den Softwarecode (108) auszuführen, um das Verfahren nach einem der Ansprüche 1-10 durchzuführen.

## Revendications

1. Procédé comprenant :
la réception d'un contenu primaire (112, 212, 312) ;
l'exécution d'au moins une parmi une analyse visuelle ou une analyse audio du contenu primaire (112, 212, 312) ;
la génération, sur la base de l'exécution de l'au moins une parmi l'analyse visuelle ou l'analyse audio, d'une piste d'accessibilité, dans lequel la piste d'accessibilité comprend :
une performance en langue des signes réalisée à l'aide d'un modèle animé et d'un ensemble de données émotionnelles utilisé pour commander le modèle animé afin qu'il réalise des émotions ou des gestes, dans lequel les émotions ou les gestes sont réalisés avec au moins un parmi une vitesse, une force ou une emphase déterminées ; ou
un ou plusieurs effets haptiques configurés pour être actionnés lorsque le contenu primaire (112, 212, 312) atteint un emplacement correspondant à chacun des un ou plusieurs effets haptiques ;
la synchronisation de la piste d'accessibilité avec le contenu primaire (112, 212, 312) ; et
le fait de compléter le contenu primaire (112, 212, 312) avec la piste d'accessibilité afin de fournir un contenu renforcé en accessibilité (120, 220, 320).

2. Procédé selon la revendication 1, dans lequel la synchronisation de la piste d'accessibilité avec le contenu primaire (112, 212, 312) est réalisée de manière concomitante avec la génération de la piste d'accessibilité.

3. Procédé selon la revendication 1, dans lequel, lorsque la piste d'accessibilité comprend la performance en langue des signes, la performance en langue des signes est configurée pour être affichée sous forme de superposition image sur image (PiP) sur le contenu primaire (112, 212, 312).

4. Procédé selon la revendication 3, dans lequel la superposition PiP est configurée pour être repositionnée ou activée ou désactivée sur la base d'une sélection utilisateur.

5. Procédé selon la revendication 3, dans lequel, lorsque la piste d'accessibilité comprend la performance en langue des signes, la superposition PiP de la performance en langue des signes emploie un masquage alpha pour montrer uniquement un interprète de la performance en langue des signes, ou l'interprète ayant un contour ajouté pour le contraste.

6. Procédé selon la revendication 1, dans lequel le contenu primaire (112, 212, 312) comprend un contenu audio, et dans lequel la performance en langue des signes est générée sur la base du contenu audio à l'aide d'un traitement de langage naturel (NLP).

7. Procédé selon la revendication 6, dans lequel le modèle animé change d'orientation pendant une scène pour apparaître comme faisant face à une caméra.

8. Procédé selon la revendication 1, dans lequel l'ensemble de données émotionnelles est dérivé d'un balayage facial.

9. Procédé selon la revendication 1, dans lequel la piste d'accessibilité comprend en outre un ou plusieurs jetons vidéo, dans lequel chacun des un ou plusieurs jetons vidéo inclut une vidéo préproduite, et dans lequel chacun des un ou plusieurs jetons vidéo exprime un mot-signe unique, une séquence de signes, ou une représentation abrégée d'une séquence de signes.

10. Procédé selon la revendication 1, dans lequel la piste d'accessibilité comprend les un ou plusieurs effets haptiques.

11. Système (100) comprenant un matériel de traitement (104) et une mémoire (106) stockant un code logiciel (108), **caractérisé par** :
le matériel de traitement (104) étant adapté pour exécuter le code logiciel (108) afin de réaliser le procédé de l'une quelconque des revendications 1 à 10.
